# DEMANDE DE BREVET EUROPEEN

(11) **EP 4 386 133 A2**
(43) Date de publication de la demande: **19.06.2024**
(21) Numéro de dépôt: 24166856.5
(22) Date de dépôt: 14.03.2018
(51) Int. Cl.: D06M 15/53

(54) **PROCÉDÉ DE FABRICATION D'UN PRODUIT À BASE DE FIBRES MINÉRALES OU ORGANIQUES**

(30) Priorité: 15.03.2017 FR 1752107
(62) Demande divisionnaire de: 18714313.6
(71) Demandeur: SAINT-GOBAIN ISOVER, 92400 Courbevoie (FR)
(72) Inventeur: SALOMON, Pierre, 93300 Aubervilliers (FR); JAFFRENNOU, Boris, 93300 Aubervilliers (FR)
(74) Mandataire: Saint-Gobain Recherche

(57) **Abrégé**

La présente invention concerne une solution aqueuse de poly(alcool furfurylique) pour l'encollage de fibres organique ou minérales contenant :
- de 40 % à 85 % en poids de poly(alcool furfurylique),
- de 15 % à 60 % en poids d'eau, et
- moins de 1,5 % en poids d'alcool furfurylique,
ladite solution étant caractérisée par le fait qu'elle est exempte de formaldéhyde et qu'elle présente un pH compris entre une valeur supérieure à 7,0 et 10, de préférence compris entre 7,2 et 10,0.

## Description

La présente invention concerne une solution concentrée d'oligomères d'alcool furfurylique, stable au stockage. Elle concerne également l'utilisation d'une telle solution concentrée pour la fabrication de compositions d'encollage pour fibres minérales ou organiques, ainsi qu'un procédé de fabrication de produits à base de fibres minérales ou organiques liées par un liant à base de poly(alcool furfurylique).

L'alcool furfurylique est fabriqué industriellement par réduction du furfural obtenu à partir de certaines matières cellulosiques ou déchets végétaux tels que la bagasse de canne à sucre, le son de céréales, les grignons d'olives ou les bois résineux. Il est utilisé depuis plusieurs dizaines d'années pour la fabrication de moules de fonderie en sable. L'alcool furfurylique, très liquide, présente une bonne affinité pour le sable qu'il pénètre facilement. En présence d'un acide, tel que l'acide phosphorique, il polymérise et durci rapidement pour former un réseau polymérique tridimensionnel qui agglomère les grains de sable.

La volatilité, inflammabilité et toxicité de l'alcool furfurylique impose des précautions d'emploi. Son utilisation en tant que liant par application directe par pulvérisation sur des fibres n'a pas été constatée jusqu'à présent.

Il a été envisagé d'utiliser des résines polyfuraniques, c'est-à-dire des compositions liquides contenant des oligomères ou (co)polymères d'alcool furfurylique en tant que liants pour fibres minérales, pour remplacer partiellement ou totalement les résines à base de formaldéhyde (urée-formaldéhyde, phénol-formaldéhyde, mélamine-formaldéhyde) utilisées classiquement pour la fabrication de produits d'isolation à base de laine minérale (voir par exemple WO 93/25490, WO94/26676, WO94/26677, WO94/26798). Les résines « furaniques » ou « polyfuraniques » décrites dans ces documents sont des mélanges de monomères, oligomères et polymères obtenus par polycondensation en milieu acide de monomères à noyau « furane » et éventuellement d'autres comonomères tels que des anhydrides, aldéhydes, cétones, urée, phénol etc.

Deux résines furaniques sont décrites plus en détail notamment dans WO94/26677 comme étant des produits du commerce, à savoir les produits
- Farez^{™} M (QO Chemicals), une résine d'alcool furfurylique et de formaldéhyde-urée contenant 6 % d'alcool furfurylique résiduel et également de 0,4 à 1,1 % de formaldéhyde, et
- Quacorr^{™} 1300 (QO Chemicals), une résine obtenue par polycondensation d'alcool furfurylique ayant une teneur résiduelle en alcool furfurylique comprise entre 2 % et 18 %.

Ces deux résines présentent un pH acide (pH 4 - 7), ne sont pas diluables à l'infini avec de l'eau et forment des compositions troubles au-delà d'une certaine teneur en eau (point trouble, en anglais *cloud point*)*.* Pour pouvoir préparer des liants monophasiques de viscosité acceptable il est nécessaire d'y ajouter des solvants organiques.

Par ailleurs, pour obtenir des compositions de liant suffisamment réactives, des acides organiques ou minéraux sont systématiquement ajoutés aux compositions de liant diluées avant application sur les fibres minérales et durcissement du liant en étuve.

Une autre résine furanique disponible sur le marché est la résine BioRez^{™} (TransFurans Chemicals, Belgique) obtenue par polycondensation d'alcool furfurylique en présence d'un catalyseur acide. Elle présente un pH acide entre environ 4,5 et 5,5, une faible teneur en alcool furfurylique (inférieure à 1 % de la composition aqueuse commercialisée) et une viscosité à 25 °C inférieure à 1000 mPa.s à 75% d'extrait sec.

La Demanderesse, lorsqu'elle a voulu utiliser cette résine pour la préparation de compositions d'encollage, également appelées liants, a été confrontée à l'instabilité de celle-ci. En effet, la viscosité de la solution concentrée augmentait continuellement, la rendant impropre au stockage, ce qui obligeait soit à la consommer dans un délai très court, de quelques heures ou jours seulement, ou bien à la conserver dans un environnement réfrigéré. Cette instabilité est particulièrement préjudiciable à une utilisation industrielle à grande échelle dans laquelle les compositions de liant doivent être acheminées sur des grandes distances entre le poste de stockage et le poste d'utilisation, et peuvent rester dans les conduites en cas d'arrêt du procédé.

Cette augmentation de la viscosité a été attribuée par la Demanderesse à la présence du catalyseur acide de polycondensation toujours présent dans la résine commercialisée et jugé indispensable à une bonne réactivité de la résine après application.

La présente invention est basée sur la découverte que la stabilité au stockage de la solution aqueuse concentrée de poly(alcool furfurylique) pouvait être augmentée de manière spectaculaire, par simple neutralisation et alcalinisation de la solution au-delà de pH 7. L'ajout d'une solution d'ammoniaque (NH₄OH) jusqu'à obtention d'une solution basique, permettait de ralentir, voire d'arrêter l'augmentation de la viscosité et de transporter la résine sous forme concentrée à température ambiante puis de la conserver pendant plusieurs semaines dans un environnement non réfrigéré.

La Demanderesse a été particulièrement surprise de constater que la résine concentrée stabilisée pouvait, en dépit de son pH basique, être utilisée telle quelle pour la préparation de compositions d'encollage pour fibres minérales ou organiques par simple dilution à l'eau, sans qu'il soit nécessaire d'y ajouter un catalyseur acide pour compenser la perte de réactivité résultant de l'augmentation du pH.

Cette découverte va à l'encontre d'une conviction forte régnant dans le domaine technique des moules de fonderie et des liants pour fibres minérales selon laquelle la polymérisation et le durcissement de compositions à base d'alcool furfurylique ou d'oligomères d'alcool furfurylique nécessite forcément un milieu acide, c'est-à-dire la présence d'une concentration importante de protons.

La présente demande a donc pour objet une composition aqueuse concentrée d'oligomères d'alcool furfurylique, qui présente un pH basique et est de ce fait stable au stockage, ainsi qu'un procédé de fabrication de produits à base de fibres utilisant une composition d'encollage obtenue par dilution de cette composition concentrée.

Plus précisément, la présente demande a pour objet une solution aqueuse de poly(alcool furfurylique) contenant
- de 40 % à 85 % en poids de poly(alcool furfurylique),
- de 15 % à 60 % en poids d'eau, et
- moins de 1,5 % en poids d'alcool furfurylique,
   ladite solution étant caractérisée par le fait qu'elle présente un pH supérieur à 7,0, de préférence compris entre 7,2 et 10,0.

La solution aqueuse de poly(alcool furfurylique) de la présente invention est de préférence essentiellement constituée
- d'eau,
- d'oligomères d'alcool furfurylique, appelés ci-après poly(alcool furfurylique),
- d'alcool furfurylique résiduel n'ayant pas réagi,
- d'un sel résultant de la neutralisation de l'acide organique ou minéral ayant servi de catalyseur de polycondensation,
- d'un excès de base (pH alcalin).

Il est bien entendu impossible de fournir ici une liste exhaustive des composants qui ne sont pas présents dans la composition de résine de la présente invention. La Demanderesse entend plus particulièrement protéger des solutions de résine qui sont exemptes de formaldéhyde, et de préférence des solutions de résine qui sont exemptes de formaldéhyde et en outre de réactifs monomères utilisés classiquement pour la préparation de résines à base de formaldéhyde tels que le phénol, les crésols, l'urée, les amines et alcanolamines et la mélamine.

Cette absence d'amines n'exclut bien entendu pas de neutraliser le catalyseur par une amine organique (base faible). Dans ce cas, la quantité d'amine ajoutée à la solution aqueuse de poly(alcool furfurylique) est généralement inférieure à 5 % en poids, de préférence inférieure à 4 % en poids rapporté au poids sec total de la solution.

La solution aqueuse de poly(alcool furfurylique) de la présente invention pourrait en revanche contenir un certain nombre d'additifs présents classiquement dans les compositions d'encollage diluées, destinées à être appliquées sur les fibres. Ces additifs sont normalement ajoutés au moment de la dilution de la composition, mais rien n'interdit en principe de les ajouter déjà à la composition concentrée qu'il suffira ensuite de diluer simplement avec de l'eau. Bien entendu, ces additifs doivent être chimiquement stables et ne pas réagir avec les composants de la solution de résine de la présente invention pendant la durée de transport et stockage de celle-ci.

On peut citer à titre d'exemple de tels additifs
- les agents de couplage choisis parmi les silanes fonctionnels ; un silane fonctionnel comporte généralement au moins une, de préférence deux ou trois fonctions alcoxysilyle hydrolysables, et au moins une fonction réactive (oxirane, amine, hydroxyle, halogénure) portée par un groupe organique non hydrolysable, lié à l'atome de silicium par une liaison Si-C ;
- les agents hydrophobisants, par exemple des silicones ;
- les agents anti-poussière, en particulier les huiles minérales généralement ajoutées sous forme d'émulsion aqueuse éventuellement en présence d'un ou plusieurs agents tensioactifs ;
- des colorants.

La solution aqueuse de poly(alcool furfurylique) de la présente invention est toutefois de préférence exempte de tels additifs et le poly(alcool furfurylique) et l'eau représentent ensemble avantageusement au moins 95 % en poids de la solution, de préférence au moins 96 % en poids de la solution, en particulier au moins 97 % en poids de la solution et idéalement au moins 98 % en poids de la solution.

Sa concentration en poly(alcool furfurylique) est de préférence comprise entre 50 à 80 % en poids et en particulier entre 60 et 77 % en poids, ces pourcentages étant exprimés par rapport au poids total de la solution et n'englobent pas la teneur résiduelle en alcool furfurylique monomère.

Comme indiqué précédemment, le poly(alcool furfurylique) désigne ici un produit d'auto-condensation de l'alcool furfurylique se présentant sous forme d'oligomères comportant au moins deux motifs furaniques, le cas échéant d'un mélange d'oligomères de poids moléculaire variable.

La teneur résiduelle en alcool furfurylique monomère de la solution de la présente invention est de préférence la plus faible possible. L'alcool furfurylique (numéro CAS 98-00-0) est en effet un composé organique volatil (COV) considéré comme nocif par contact cutané, inhalation et par ingestion.

La solution de résine concentrée de la présente invention contient donc de préférence moins de 1,0 % en poids, plus préférentiellement moins de 0,5 % en poids et idéalement moins de 0,2 % en poids d'alcool furfurylique.

Son pH est basique, c'est-à-dire strictement supérieur à 7,0, de préférence compris entre 7,2 et 10, plus préférentiellement entre 7,3 et 9,5, en particulier compris entre 7,4 et 9,0 et idéalement entre 7,5 et 8,5.

La solution aqueuse de poly(alcool furfurylique) n'est de préférence pas une solution tamponnée.

Lorsque le poly(alcool furfurylique) est obtenu par une réaction en catalyse acide, la quantité de base ajoutée est au moins égale à la quantité nécessaire pour neutraliser l'acide résiduaire dans le produit de réaction non purifié.

Le pH de la solution aqueuse de poly(alcool furfurylique) peut être ajusté par simple ajout d'une base organique ou minérale, volatile ou non volatile, par exemple par ajout d'une solution aqueuse de NaOH, de KOH, d'ammoniaque (NH₄OH) ou d'une amine, par exemple d'une amine primaire ou secondaire. On utilise de préférence de l'ammoniaque et/ou des amines primaire ou secondaire. Dans un mode de réalisation intéressant, l'amine est une polyamine comportant de préférence de 2 à 5 fonctions amine primaire/secondaire, ou un polymère aminé tel que la polyéthylèneimine.

La viscosité de la solution peut varier entre de larges limites. Elle dépend non seulement du degré de polymérisation de l'oligomère d'alcool furfurylique mais également d'autres paramètres tels que la température et la concentration de la solution. La viscosité Brookfield des solutions de résine de poly(alcool furfurylique) est mesurée à 20 °C à l'aide d'un viscosimètre Brookfield, après ajustement de la teneur en matières solides, par ajout d'eau désionisée, jusqu'à 40 % en poids. Dans ces conditions elle est de préférence comprise entre 1 et 1000 mPa.s, plus préférentiellement entre 2 et 500 mPa.s, en particulier entre 3 et 100 mPa.s.

Normalement les viscosités au-delà de quelques dizaines de mPa.s sont trop élevées pour permettre l'application de la solution de poly(alcool furfurylique) telle quelle sur les fibres organiques ou minérales par pulvérisation, immersion ou enduction. La solution aqueuse concentrée doit donc être préalablement diluée, de préférence par ajout d'eau, généralement par ajout de 5 à 100 volumes d'eau par volume de solution concentrée sans apparition d'un trouble (*cloud point*) qui correspond à une séparation de phases.

L'aptitude à la dilution, ou « diluabilité », d'une solution de résine concentrée est définie comme étant le volume d'eau déionisée qu'il est possible, à une température donnée, d'ajouter à une unité de volume de la solution aqueuse de résine avant l'apparition d'un trouble permanent. On considère généralement qu'une résine est apte à être utilisée en tant qu'encollage lorsque sa diluabilité est égale ou supérieure à 1000 %, à 20°C.

La solution aqueuse de poly(alcool furfurylique) présente avantageusement une diluabilité supérieure à 1000 %, de préférence supérieure à 2000 %.

L'invention a également pour objet un procédé de fabrication d'une solution de poly(alcool furfurylique) telle que précédemment décrite, comprenant une étape d'auto-condensation d'alcool furfurylique en phase aqueuse en présence d'un catalyseur acide, ledit procédé étant caractérisé par le fait que l'on ajoute une base au produit de la réaction d'autocondensation pour ajuster son pH à une valeur supérieure à 7,0. La réaction d'autocondensation est de préférence conduite jusqu'à ce que le taux d'alcool furfurylique monomère libre est inférieur à 3,7% par rapport au poids total de solide, en particulier inférieur à 1%, avantageusement inférieur à 0,5%, voire inférieur à 0,3 % par rapport au poids total de solide.

La présente invention a également pour objet un procédé de fabrication d'un produit à base de fibres minérales ou organiques liées par un liant organique, ledit procédé comprenant
(a) la préparation d'une composition d'encollage présentant un pH supérieur à 7,0 , de préférence compris entre 7,2 et 10, par dilution avec de l'eau d'une solution aqueuse de poly(alcool furfurylique) telle que décrite ci-avant,
(b) l'application de la composition d'encollage sur des fibres minérales ou organiques,
(c) avant ou après l'étape (b), formation d'un assemblage de fibres minérales ou organiques,
(d) chauffage de l'assemblage de fibres minérales ou organiques encollées jusqu'à durcissement de la composition d'encollage.

L'étape (a) de préparation de la composition d'encollage ne comprend de préférence pas l'ajout d'un acide à la solution aqueuse de poly(alcool furfurylique). La Demanderesse a en effet constaté que, contrairement aux préjugés techniques existants, la polycondensation des oligomères d'alcool furfurylique présents dans la composition d'encollage se déroule de manière satisfaisante au moment de l'étape de durcissement, même en l'absence de catalyseur acide, c'est-à-dire à pH basique.

Les produits à base de fibres et d'un liant polyfuranique obtenu à partir d'une solution d'encollage basique présentent en effet des propriétés mécaniques très similaires, voire identiques à celles de produits équivalents obtenus avec une solution d'encollage acide.

L'étape (a) peut comprendre en outre l'ajout de différents adjuvants spécifiques des utilisations envisagées pour le produit final.

Dans le domaine des laines de verre ou de roche, les adjuvants sont choisis notamment parmi les agents de couplage (par exemple des aminoalkyl-alcoxysilanes ou époxyalkyl-alcoxysilanes), les agents anti-poussière (huiles, notamment huiles minérales) et les agents hydrophobisants (en particulier des silicones).

On peut également employer des colorants, des agents assouplissants ou conditionneurs, par exemple des tensioactifs, des charges solubles inertes chimiquement, ainsi que des additifs solides particulaires tels que des agents opacifiants. La teneur totale en adjuvants et additifs n'excède généralement pas 20 à 25% en poids de la fraction solide de la composition d'encollage.

La composition d'encollage diluée à partir de la solution de poly(alcool furfurylique) présente avantageusement une teneur en matières solides comprise entre 2 et 20 % en poids, de préférence entre 2,5 et 15 % en poids, et en particulier entre 3 et 10 % en poids. Ces pourcentages englobent les éventuels adjuvants ajoutés.

La solution aqueuse de poly(alcool furfurylique) de la présente invention peut être utilisée pour lier des fibres organiques ou minérales. Les fibres organiques peuvent être des fibres naturelles, artificielles (c'est-à-dire des fibres naturelles ayant subi une modification chimique) ou synthétiques.

Les fibres minérales sont en particulier des fibres de verre et des fibres de roche.

Les fibres peuvent être assemblées,
- en matelas souples, par exemple en matelas de laine de verre ou laine de roche, enroulables et compressibles,
- en plaques de fibres, plus denses et rigides que les matelas enroulables,
- en produits moulés à base de fibres, par exemple des doublures de conduits ou de canalisations,
- en textiles tissés ou non-tissés, tels que des mats non-tissés de fibres de verre ou organiques.

Dans un mode de réalisation préféré du procédé de l'invention l'application de la composition d'encollage sur des fibres minérales ou organiques (étape (b)) se fait par pulvérisation au moyen de buses de pulvérisation.

Cette étape (b) d'application de la composition d'encollage sur les fibres minérales ou organiques précède de préférence l'étape (c) d'assemblage des fibres, c'est-à-dire on applique sur les fibres, de préférence par pulvérisation, la composition d'encollage diluée avant de rassembler les fibres encollées, par exemple dans un moule ou sur un convoyeur, et de les chauffer ensuite pour réticuler et durcir le liant.

Dans un mode de réalisation préféré du procédé selon l'invention, les fibres sont des fibres minérales et l'assemblage de fibres minérales présente, après l'étape (d) de durcissement, une perte par combustion (LOI, de l'anglais *loss on ignition*) comprise entre 1 % et 20 %, de préférence entre 1 % et 7 % en poids.

L'étape (d) comprend le chauffage de l'assemblage de fibres à une température comprise de préférence entre 120 et 250 °C pendant une durée de chauffage comprise entre 1 et 10 minutes, de préférence dans une enceinte thermorégulée, telle qu'une étuve à air forcé dans laquelle on introduit dans un ou plusieurs compartiments des gaz chauds de température contrôlée, une étuve à microondes, ou un moule chauffant à circulation de fluide ou résistance chauffante.

### Exemple 1

On prépare, par dilution de résine BioRez^{™} (TransFurans Chemicals, Belgique), trois solutions aqueuses de poly(alcool furfurylique) ayant une teneur matières solides de 30 %, puis on ajuste leur pH par ajout d'ammoniaque (NH₄OH) à une valeur de 4,9 de 7,1 et de 9,0 respectivement.

Un rectangle de 55 mm x 6 mm découpé dans un filtre de microfibres en verre non liées (Whatman, référence 1822-150) est imprégné avec environ 300 mg de chacune de ces solutions.

On introduit ces rectangles imprégnés de solution de résine dans un appareil d'analyse mécanique dynamique (DMTA), on augmente progressivement (4°C/minute) la température du porte-échantillon en partant de 25 °C jusqu'à 250 °C, en mesurant en continu le module de conservation (E') en flexion à 3 points (fréquence de 1 Hz, déformation de 0,1 %).

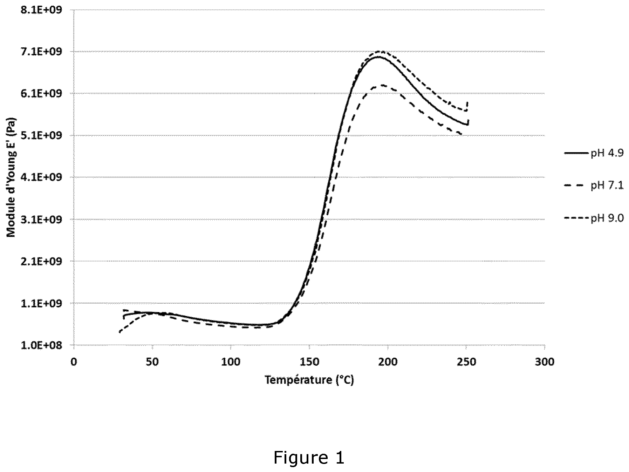

La figure 1 montre l'évolution du module de conservation en fonction de la température pour chacun des trois échantillons (pH 4,9 ; pH 7,1 ; pH 9,0).

On peut constater que la température de réticulation est essentiellement la même pour les trois échantillons, c'est-à-dire qu'un échantillon selon l'invention présentant un pH de 7,1 ou de 9,0 réticule à la même température qu'un échantillon comparatif à pH 4,9. Les modules de conservation des deux échantillons à pH 4,9 et 9,0 sont également presque identiques.

En revanche la stabilité au stockage à température ambiante de ces trois solutions dépend fortement du pH. A 25°C, la viscosité de la solution à pH 4,9 double en à peu près 21 jours, tandis que celle de la solution à pH 7,1 augmente de seulement 7% pendant ce temps et celle de la solution à pH 9,0 augmente de moins de 4 % en 21 jours.

### Exemple 2

On prépare par dilution de résine BioRez^{™} des solutions aqueuses de poly(alcool furfurylique) ayant une teneur matières solides de 20 %, puis on ajuste leur pH par ajout d'ammoniaque (NH₄OH), d'hexaméthylènediamine (HMDA) ou de polyéthylèneimine (PEI, Lupasol FG) à pH basique (voir Tableau 1).

La température de début de réticulation est déterminée par analyse thermoméchanique dynamique (DMTA, de l'anglais *Dynamic Mechanical Thermal Analysis*) qui permet de caractériser le comportement viscoélastique d'un matériau polymérique. Deux bandelettes de papier en microfibres de verre sont découpées et superposées. Trente milligrammes de solution aqueuse ayant une teneur en matières solides de 20 % sont déposés de manière homogène sur les bandelettes qui sont ensuite fixées horizontalement entre deux mors d'un appareil RSAIII (Texas Instrument). Un élément oscillant muni d'un dispositif de mesure de la contrainte en fonction de la déformation appliquée est disposé sur la face supérieure de l'échantillon. Le dispositif permet de déterminer le module d'élasticité E'. L'échantillon est chauffé à une température variant de 20 à 250°C à la vitesse de 4°C/min. A partir des mesures, on établit la courbe de variation du module d'élasticité E' (en MPa) en fonction de la température (en °C) dont l'allure générale est donnée dans la Figure 1.

Les courbes de DMTA sont modélisées en trois segments de droite :
1) tangente à la courbe avant le début de la réaction,
2) pente de la droite pendant l'augmentation du module en cours de réaction,
3) tangente à la courbe après la fin de l'augmentation du module.

La température de début de réticulation (TR) est la température à l'intersection des deux premières droites.

Le tableau 1 ci-après montre la température de début de réticulation pour chacun des échantillons préparés.

**Tableau 1**

| Base ajoutée | pH | Température de début de réticulation (DMTA, en °C) |
|---|---|---|
| aucune | 4,6 | 119 |
| NH₄OH | 7,1 | 121 |
| NH₄OH | 8,8 | 125 |
| HMDA | 7,1 | 119 |
| HMDA | 9,0 | 122 |
| PEI | 7,1 | 116 |
| PEI | 9,0 | 112 |

On constate que les températures de début de réticulation ne sont pas significativement augmentées par l'ajout de base. Le système conserve donc sa réactivité à chaud, tout en étant stabilisé à température ambiante.

### Exemple 3

On prépare par dilution de résine BioRez^{™} des solutions aqueuses de poly(alcool furfurylique) ayant une teneur matières solides de 20 %, puis on ajuste leur pH par ajout d'ammoniaque (NH₄OH), d'hexaméthylènediamine (HMDA) ou de polyéthylèneimine (PEI, Lupasol FG) à pH basique (voir Tableau 2).

On imprègne deux séries de toiles de verre respectivement avec ces compositions aqueuses d'encollage, puis les toiles sont passées sur un dispositif d'aspiration permettant d'éliminer le surplus de solution. On fait ensuite durcir les toiles de verre imprégnées dans une étuve thermostatée à 220 °C. Après 120 et 150 secondes de cuisson à 220 °C, on soumet un échantillon à une détermination de la résistance à la rupture en traction. Pour cela les toiles sont découpées en bandes (250 mm x 50 mm) et leurs extrémités sont insérées dans les mâchoires d'une machine de traction.

Le tableau 2 montre la force maximale (en Newton) mesurée au moment de la rupture.

**Tableau 2**

| | pH | Temps de cuisson | Force maximale au moment de la rupture (N) |
|---|---|---|---|
| Biorez | 4,6 | 120 s | 93,6 |
| Biorez | 4,6 | 150 s | 93,5 |
| Biorez + NH3 | 7,1 | 120 s | 92,6 |
| Biorez + NH3 | 7,1 | 150 s | 91,9 |
| Biorez + NH3 | 8,8 | 120 s | 79,6 |
| Biorez + NH3 | 8,8 | 150 s | 85,2 |
| Biorez + HMDA | 7,1 | 120 s | 84,2 |
| Biorez + HMDA | 7,1 | 150 s | 85,6 |
| Biorez + HMDA | 9,0 | 120 s | 80,7 |
| Biorez + HMDA | 9,0 | 150 s | 81,3 |
| Biorez + PEI | 7,1 | 120 s | 101,8 |
| Biorez + PEI | 7,1 | 150 s | 94,7 |
| Biorez + PEI | 8,8 | 120 s | 98,4 |
| Biorez + PEI | 8,8 | 150 s | 100,6 |

On constate que l'ensemble des échantillons préparés présentent des résistances en traction satisfaisantes. La stabilisation des compositions de liant par ajout d'une base jusqu'à pH basique ne se traduit donc pas par une dégradation des propriétés mécaniques des produits finis.

## Revendications

1. Solution aqueuse de poly(alcool furfurylique) pour l'encollage de fibres organique ou minérales contenant :
- de 40 % à 85 % en poids de poly(alcool furfurylique),
- de 15 % à 60 % en poids d'eau, et
- moins de 1,5 % en poids d'alcool furfurylique,
ladite solution étant **caractérisée par le fait qu'**elle est exempte de formaldéhyde et qu'elle présente un pH compris entre une valeur supérieure à 7,0 et 10, de préférence compris entre 7,2 et 10,0.

2. Solution aqueuse selon la revendication précédente, **caractérisée par le fait que** le poly(alcool furfurylique) et l'eau représentent ensemble au moins 95 % en poids de la solution, de préférence au moins 96 % en poids de la solution, en particulier au moins 97 % en poids de la solution et idéalement au moins 98 % en poids de la solution.

3. Solution aqueuse selon l'une quelconque des revendications précédentes, **caractérisée par le fait qu'**elle contient de 50 à 80 % en poids, de préférence de 60 à 77 % en poids de poly(alcool furfurylique).

4. Solution aqueuse selon l'une quelconque des revendications précédentes, **caractérisée par le fait que** sa teneur en alcool furfurylique est inférieure à 1,0 % en poids, de préférence inférieure à 0,5 % en poids, idéalement inférieure à 0,2 % en poids.

5. Solution aqueuse selon l'une quelconque des revendications précédentes, **caractérisée par le fait qu'**elle présente un pH compris entre 7,3 et 9,5, de préférence entre 7,4 et 9,0 et idéalement entre 7,5 et 8,5.

6. Solution aqueuse selon l'une quelconque des revendications précédentes, **caractérisée par le fait que** sa viscosité Brookfield, déterminée à 20 °C, après ajustement de la teneur en matières solides, par élimination ou ajout d'eau, jusqu'à 40 % en poids, est comprise entre 5 et 1000 mPa.s, de préférence entre 10 et 900 mPa.s, en particulier entre 20 et 800 mPa.s.

7. Solution aqueuse selon l'une quelconque des revendications précédentes, **caractérisée par le fait qu'**elle comprend en outre des additifs choisis de préférence parmi les agents de couplage, les agents hydrophobisant, les agents anti-poussières et les colorants.

8. Solution aqueuse selon l'une quelconque des revendications 1 à 6, **caractérisée par le fait qu'**elle est exempte d'additifs, tels que les agents de couplage, les agents hydrophobisant, les agents anti-poussières et les colorants.
